# FASCICULE DE BREVET EUROPEEN

(11) **EP 3 963 120 B1**
(45) Date de publication et mention de la délivrance du brevet: **03.01.2024**
(21) Numéro de dépôt: 20727581.9
(22) Date de dépôt: 30.04.2020
(51) Int. Cl.: C23C 8/34, C21D 1/06, C21D 9/32, C22C 38/44, C22C 38/52

(54) **PIÈCE EN ACIER CÉMENTÉE POUR L'AÉRONAUTIQUE**
EINSATZGEHÄRTETES STAHLTEIL ZUR VERWENDUNG IN DER LUFTFAHRT
CASE-HARDENED STEEL PART FOR USE IN AERONAUTICS

(30) Priorité: 02.05.2019 FR 1904634
(43) Date de publication de la demande: 09.03.2022
(73) Titulaire: Safran Helicopter Engines, 64510 Bordes (FR)
(72) Inventeur: VERNAULT, Cyril Roger, 77550 MOISSY-CRAMAYEL (FR); PETROIX, Bruno, 77550 MOISSY-CRAMAYEL (FR)
(74) Mandataire: Regimbeau
(86) Numéro de dépôt international: PCT/EP2020/062142
(87) Numéro de publication internationale: WO 2020/221900

(56) Documents cités:
- EP-A1- 3 502 302
- CN-A- 108 118 260
- CN-A- 109 338 280
- R Gorockiewicz ET AL: "The LPC Process for High-Alloy Steel", Vacuum, 30 septembre 2008 (2008-09-30), pages 42-51, XP055421497, Extrait de l'Internet: URL:https://www.questek.com/filebase/src/A rticles/TheLPCProcessforHigh-Alloy.pdf [extrait le 2017-11-03]
- KLEFF J WIEDMANN D: "NEUE WEGE BEI DER WAERMEBEHANDLUNG UND OBERFLAECHENBEHANDLUNG HOCHBELASTETER LUFTFAHRT-GETRIEBEBAUTEILE", HTM HAERTEREI TECHNISCHE MITTEILUNGEN: ZEITSCHRIFT FUER WERKSTOFFE, WAERMEBEHANDLUNG UND FERTIGUNG, CARL HANSER VERLAG, MUNCHEN, DE, vol. 55, no. 1, 1 janvier 2000 (2000-01-01), pages 59-64, XP000893946, ISSN: 0341-101X

## Description

### DOMAINE DE L'INVENTION

La présente invention concerne une pièce en acier pour l'aéronautique, de préférence un pignon de transmission de puissance, pour l'aéronautique. La présente invention concerne également un procédé de fabrication d'une telle pièce.

### ETAT DE LA TECHNIQUE

Une pièce pour l'aéronautique, en particulier un pignon de transmission de puissance, est typiquement fabriquée en acier. L'acier utilisé est typiquement sélectionné de manière à maximiser à la fois la tenue en température, la tenue en fatigue hertzienne, en fatigue oligo-cyclique et la résistance aux incrustations provenant d'un corps étranger. Le terme « acier » désigne dans la présente invention un alliage métallique comprenant majoritairement du fer, et comprenant du carbone, dans lequel la fraction massique de carbone est comprise entre 0,008 % et 2 %.

Deux types d'acier peuvent être utilisés de manière connue pour augmenter la tenue en température : le ferrium (marque déposée) C61 et le ferrium C64, développés par la société QuesTek. Le ferrium C61 est un acier, présentant une fraction massique moyenne en carbone comprise entre 0,13 % et 0,17 %, une fraction massique moyenne en cobalt comprise entre 17,5 % et 18,5 %, une somme de la fraction massique moyenne en molybdène et de la fraction massique moyenne en tungstène comprise entre 0,9 % et 1,3 %, et une fraction massique moyenne en nickel comprise entre 9,2 % et 9,8 %. Le ferrium C64 est un acier également développé par la société QuesTek, présentant une fraction massique moyenne en carbone comprise entre 0,09 % et 0,13 %, une fraction massique moyenne en cobalt comprise entre 15,5 % et 17 %, une fraction massique moyenne en aluminium inférieure à 0,1 %, une fraction massique moyenne en nickel comprise entre 7,2 % et 7,8 %. Toutefois, les compositions du ferrium C61 et du ferrium C64 ne présentent pas de tenue en fatigue suffisante pour certaines applications, telle que la transmission de puissance dans l'aéronautique.

A cet effet, le ferrium C61 et le ferrium C64 peuvent être cémentés. Le terme « cémentation » désigne un traitement thermochimique permettant de faire pénétrer superficiellement du carbone dans la pièce en acier. Ainsi, la cémentation grâce à cet enrichissement sous forme d'un gradient de carbone négatif en direction du coeur de la pièce permet de générer une couche de martensite superficielle plus dure et résistante qu'au coeur de la pièce. Le document de Kern *et al.* (Kern, C. P., Wright, J. A., Sebastian, J. T., Grabowski, J. L., Jordan, D. F., & Jones, T. M., 2011, Manufacturing and Processing of a New Class of Vacuum-Carburized Gear Steels with Very High Hardenability, AGMA Technical Paper 11FTM27) décrit un traitement du ferrium C61 et du ferrium C64 comprenant les étapes de :
- cémentation à une température de 1000° C dans le domaine austénitique de l'acier,
- trempe gazeuse,
- traitement cryogénique à une température comprise entre -50° C et -100° C, et
- vieillissement de la pièce à une température comprise entre 400°C et 500°C, dans une atmosphère de gaz neutre.

Le document de Gorockiewicz et al (Gorockiewicz R., Adamek A. & Korecki M., The LPC Process for High-Alloy Steel, Vacuum, 30 September 2008 (2008-09-30), pages 42-51) décrit quant à lui un traitement de cémentation du ferrium C61 à pression réduite.

Toutefois, bien que l'acier cémenté ainsi obtenu présente une résistance à la fatigue accrue en comparaison avec un acier obtenu sans cémentation, cette résistance est toujours insuffisante pour utiliser l'acier obtenu dans certaines applications industrielles.

A cet effet, il est connu de grenailler le ferrium C61 ou le ferrium C64 cémenté. Le grenaillage permet de comprimer une couche en surface de la pièce d'acier en projetant des microbilles sur la surface de la pièce. Le grenaillage permet ainsi d'augmenter la résistance de la pièce à la fatigue, via l'introduction de contraintes résiduelles de compression. Toutefois, l'étape de grenaillage complexifie la production de la pièce, et augmente la rugosité de la pièce. Le grenaillage peut également s'avérer inefficace lors d'une utilisation de la pièce à haute température, par exemple pour des températures supérieures à 400° C. En effet, les contraintes en compression obtenues par grenaillage peuvent être amoindries par la relaxation des contraintes résiduelles de la pièce pour des températures supérieures à 500°C.

### EXPOSE DE L'INVENTION

Un but de l'invention est de proposer une solution pour augmenter la dureté d'une pièce pour l'aéronautique en ferrium C61 ou en ferrium C64 cémentée, tout en éviter les inconvénients liés au grenaillage de la pièce.

Ce but est atteint dans le cadre de la présente invention grâce à un procédé de fabrication d'une pièce en acier pour l'aéronautique comprenant les étapes consécutives de :
a) fourniture d'une pièce comprenant un substrat en acier, le substrat étant réalisé soit en ferrium C61, soit en ferrium C64, et présentant pour le ferrium C61 :
   - une fraction massique moyenne en carbone comprise entre 0.13 % et 0,17 %,
   - une fraction massique moyenne en cobalt comprise entre 17,5 % et 18,5 %,
   - une somme de la fraction massique moyenne en molybdène et de la fraction massique moyenne en tungstène comprise entre 0,9 % et 1,3 %,
      et
   - une fraction massique moyenne en nickel comprise entre 9,2 % et 9,8 % ou présentant, pour le ferrium C64 :
      - une fraction massique moyenne en carbone comprise entre 0,09 % et 0,13 %;
      - une fraction massique moyenne en cobalt comprise entre 15,5 % et 17 %,
      - une fraction massique moyenne en aluminium comprise inférieure à 0,1 %, et
      - une fraction massique moyenne en nickel comprise entre 7,2 % et 7,8 %,
b) cémentation de la pièce dans une atmosphère contrôlée à une température comprise entre 900° C et 1100° C, de manière à ce qu'au moins une partie de la pièce présente une fraction massique moyenne en carbone comprise entre 0,4 % et 0,6 %,
c) trempe de la pièce et traitement cryogénique de la pièce dans une atmosphère contrôlée à une température comprise entre -50°C et -100°C, et
d) vieillissement de la pièce dans une atmosphère contrôlée à une température comprise entre 450°C et 550°C,
le procédé étant caractérisé en ce que le vieillissement comprend une nitruration de la pièce dans une atmosphère comprenant de l'ammoniac de sorte à ce que la pièce comprenne une surface nitrurée, et en ce que la nitruration est simultanée au vieillissement de la pièce, et la couche nitrurée (3) ainsi obtenue présentant une épaisseur comprise entre 5 µm à 180 µm, préférentiellement comprise entre 50 µm et 150 µm, une fraction massique moyenne en carbone comprise entre 0,4 % et 0,6 % et une fraction massique moyenne en azote comprise entre 0,6 % et 3%.

Avantageusement, la pièce comprend une surface, la surface présentant un taux surfacique en carbone, et l'étape de cémentation du procédé comprend une répétition de cycles d'enrichissement de la pièce en carbone, chaque cycle d'enrichissement en carbone comprenant des sous étapes de :
b1) injection d'un gaz cémentant dans un enceinte de cémentation contenant la pièce, de manière à enrichir la surface de la pièce en carbone et à faire croître le taux surfacique en carbone de la pièce jusqu'à un taux surfacique en carbone maximum prédéterminé, la température dans l'enceinte étant maintenue entre 900°C et 1100°C, pendant une durée t₁ comprise entre 60 s et 300 s, et de
b2) injection d'un gaz neutre dans l'enceinte de cémentation pendant une durée t₂ comprise entre 15 s et 2000 s, de manière à faire diffuser le carbone de la surface vers l'intérieur de la pièce, et à faire décroître le taux surfacique de carbone jusqu'à un taux surfacique en carbone minimum prédéterminé.

Avantageusement, l'étape b) de cémentation comprend une injection d'un gaz cémentant dans une enceinte de cémentation contenant la pièce, le gaz cémentant étant au moins choisi parmi le propane et l'acétylène.

Un autre objet de l'invention est une pièce en acier pour l'aéronautique susceptible d'être obtenue par un procédé de l'invention, la pièce comprenant un substrat en acier, le substrat étant réalisé soit en ferrium C61, soit en ferrium C64, et présentant pour le ferrium C61 :
- une fraction massique moyenne en carbone comprise entre 0,13 % et 0,17 %,
- une fraction massique moyenne en cobalt comprise entre 17,5 % et 18,5 %,
- une somme de la fraction massique moyenne en molybdène et de la fraction massique moyenne en tungstène comprise entre 0,9 % et 1,3 %, et
- une fraction massique moyenne en nickel comprise entre 9,2 % et 9,8 %

ou présentant pour le ferrium C64 :
   - une fraction massique moyenne en carbone comprise entre 0.09 % et 0,13 %, fl
   - une fraction massique moyenne en cobalt comprise entre 15,5 % et 17 %,
   - une fraction massique moyenne en aluminium inférieure à 0,1 %, et
   - une fraction massique moyenne en nickel comprise entre 7,2 % et 7,8 %,
la pièce étant caractérisée en ce que la pièce est cémentée et nitrurée, de sorte qu'elle comprend une couche nitrurée, la couche nitrurée recouvrant au moins en partie le substrat et la couche nitrurée présentant une épaisseur comprise entre 5 µm à 180 µm, préférentiellement comprise entre 50 µm et 150 µm, une fraction massique moyenne en carbone étant comprise entre 0,4 % et 0,6 % et une fraction massique moyenne en azote étant comprise entre 0,6 % et 3 % et préférentiellement entre 0,3 % et 1 %.

La pièce peut avantageusement comprendre les caractéristiques suivantes, prises individuellement ou en l'une quelconque de leurs combinaisons techniquement possibles :
- le substrat présente une fraction massique moyenne en carbone comprise entre 0,13 % et 0,17 %, une fraction massique moyenne en cobalt comprise entre 17,5 % et 18,5 %, une somme de la fraction massique moyenne en molybdène et de la fraction massique moyenne en tungstène comprise entre 0,9 % et 1,3 %, et une fraction massique moyenne en nickel comprise entre 9,2 % et 9,8 %,
- le substrat présente une fraction massique moyenne en carbone comprise entre 0,09 % et 0,13 %, une fraction massique moyenne en cobalt comprise entre 15,5 % et 17 %, une fraction massique moyenne en aluminium inférieure à 0,1 %, une fraction massique moyenne en nickel comprise entre 7,2 % et 7,8 %.
- la couche nitrurée comprend au moins un élément choisi parmi des précipités de nitrure et des précipités de carbonitrure,
- la couche nitrurée présente majoritairement une phase martensitique.

Un autre objet de l'invention est un pignon de transmission de puissance, comprenant une pièce selon l'invention.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre schématiquement un pignon de transmission de puissance selon un mode de réalisation particulier de l'invention.
- la figure 2 est une microphotographie d'une coupe d'une pièce selon un mode de réalisation de l'invention, dans laquelle la pièce comprend un substrat en ferrium C61.
- la figure 3 est une microphotographie d'une coupe d'une pièce selon un mode de réalisation de l'invention, dans laquelle la pièce comprend un substrat en ferrium C64.
- la figure 4 est un diagramme illustrant le profil de dureté Vickers de deux pièces selon deux modes de réalisation particuliers de l'invention et de deux pièces connues.
- la figure 5 illustre un procédé de fabrication d'une pièce selon un mode de réalisation particulier de l'invention.
- la figure 6 illustre schématiquement la température d'une enceinte contenant une pièce selon un mode de réalisation de l'invention et le potentiel de nitruration contrôlé dans l'enceinte pendant le vieillissement de la pièce.

### DESCRIPTION DETAILLEE DE L'INVENTION

### Architecture générale de la pièce 1

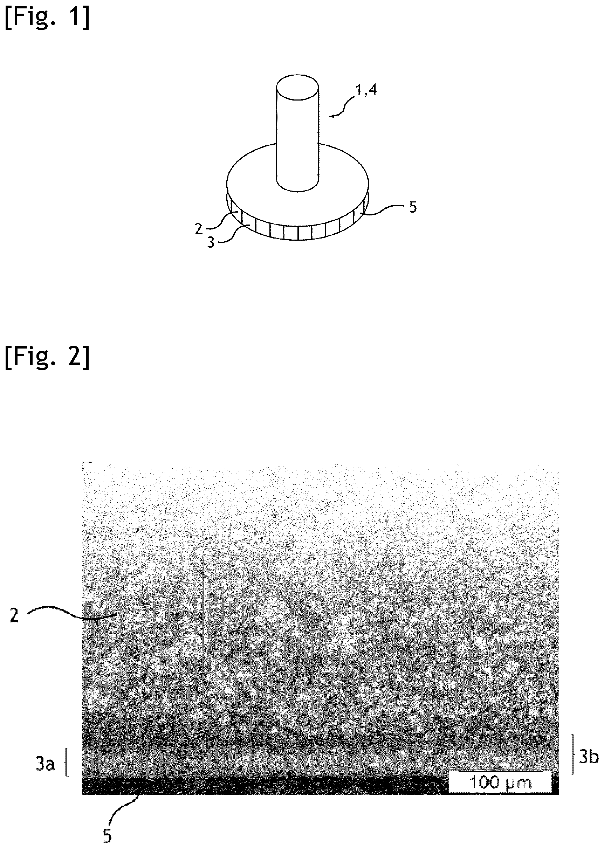

En référence à la figure 1, la pièce 1 est une pièce pour l'aéronautique en acier, comprenant un substrat 2, une couche cémentée 3b recouvrant au moins en partie le substrat 2, et une couche nitrurée 3a recouvrant au moins en partie le substrat 2. La pièce 1 présente une surface 5 extérieure. La couche nitrurée 3a peut se confondre au moins en partie ou totalement à une couche cémentée 3b. En effet, les longueurs caractéristiques de pénétration des atomes de carbone et d'azote lors de la cémentation et respectivement lors de la nitruration entraînent la formation d'une couche cémentée 3b et d'une couche nitrurée 3a, toutes deux formées à partir de la surface 5 de la pièce 1 et sur des profondeurs qui peuvent être différentes selon la couche considérée.

Un pignon de transmission de puissance 4 comprend préférentiellement la pièce 1. Le pignon de transmission de puissance 4 peut être utilisé pour transmettre la puissance d'un moteur à un rotor, par exemple le rotor principal d'un hélicoptère.

Le substrat 2 est réalisé soit en ferrium C61 soit en ferrium C64.

La couche nitrurée 3a présente une fraction massique moyenne en carbone comprise entre 0,4 % et 0,6 %. En effet, cette fraction de carbone, plus faible que la fraction de carbone d'une pièce cémentée de l'état de l'art, permet de nitrurer la pièce de manière à augmenter sa dureté tout en évitant les inconvénients liés à la formation de phases indésirables comme l'austénite résiduelle et/ou de réseaux de précipités intergranulaires.

Le substrat 2 présente une fraction massique moyenne en carbone comprise entre 0,13 % et 0,17 %, une fraction massique moyenne en cobalt comprise entre 17,5 % et 18,5 %, une somme de la fraction massique moyenne en molybdène et de la fraction massique moyenne en tungstène comprise entre 0,9 % et 1,3 %, une fraction massique moyenne en nickel comprise entre 9,2 % et 9,8 %. Ainsi, le substrat 2 présente les propriétés mécaniques du ferrium C61.

Alternativement, le substrat 2 présente une fraction massique moyenne en carbone comprise entre 0,09 % et 0,13 %, une fraction massique moyenne en cobalt comprise entre 15,5 % et 17 %, une fraction massique moyenne en aluminium inférieure à 0,1 %, une fraction massique moyenne en nickel comprise entre 7,2 % et 7,8 %. Ainsi, le substrat 2 présente les propriétés mécaniques du ferrium C64.

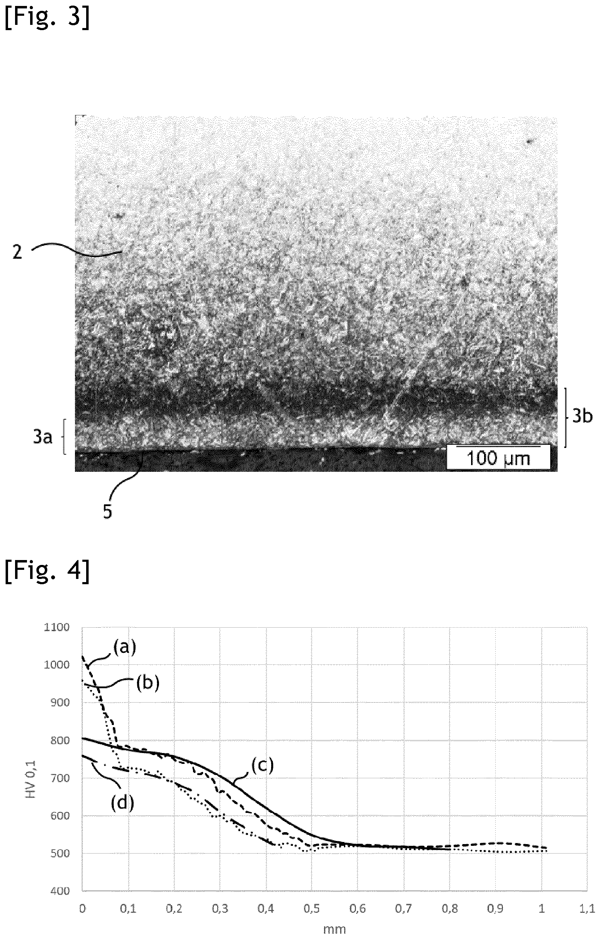

En référence à la figure 2 et à la figure 3, la couche nitrurée 3a présente une épaisseur comprise entre 5 µm et 180 µm, préférentiellement comprise entre 50 et 150 µm, et la fraction massique moyenne d'azote dans la couche nitrurée 3a est comprise entre 0,2 % et 3 % et préférentiellement entre 0,3 % et 1 %. Ainsi, la dureté de la pièce est plus élevée que la dureté d'une pièce en ferrium C61 cémentée ou en ferrium C64 cémentée, tout en conservant les propriétés mécaniques du ferrium C61 ou du ferrium C64 (telles que la tenue en température) et en évitant les inconvénients liés au grenaillage de la pièce.

En référence à la figure 2, la composition du substrat 2 est celle du ferrium C61 à une distance suffisamment grande de la surface 5, c'est-à-dire à une distance supérieure à 250 µm de la surface 5, et préférentiellement supérieure à 500 µm. La couche nitrurée 3a recouvre le substrat 2, et comprend la surface 5 sur la face de la couche nitrurée 3a opposée au substrat 2. La couche nitrurée 3a présente, depuis la surface 5 :
- préférentiellement une couche de combinaison superficielle, présentant par exemple une épaisseur depuis la surface comprise entre 0 µm et 30 µm, et comprenant au moins majoritairement et préférentiellement exclusivement des nitrures, puis par
- une couche de diffusion, présentant par exemple une épaisseur comprise entre 50 µm et 150 µm, située sous la couche de combinaison.

La couche de diffusion comprend de l'azote, la concentration massique d'azote moyenne dans la couche de diffusion étant strictement inférieure à la concentration massique en azote de la couche de combinaison. Dans cette couche l'azote peut être disséminé dans le ferrium C61 ou C64 cémenté sous forme de précipités de nitrure et/ou de précipités de carbonitrure.

En référence à la figure 3, la composition du substrat 2 est celle du ferrium C64 à une distance suffisamment grande de la surface 5, c'est-à-dire à une distance supérieure à 250 µm de la surface 5, et préférentiellement supérieure à 500 µm. La couche nitrurée 3a recouvre le substrat 2, et comprend la surface 5 sur la face de la couche nitrurée 3a opposée au substrat 2. Le substrat 2 peut comprendre une couche de diffusion en contact avec la couche nitrurée 3a. La couche de diffusion comprend de l'azote, la concentration massique d'azote moyenne dans la couche de diffusion étant strictement inférieure à la concentration massique en azote de la couche nitrurée 3a.

En référence à la figure 4, la couche nitrurée 3a de la pièce 1 selon un mode de réalisation de l'invention permet d'augmenter significativement la dureté de la pièce 1 en comparaison à une pièce connue en ferrium C61 cémentée et/ou à une pièce connue en ferrium C64 cémentée. La courbe (a) illustre le profil de dureté de la pièce 1 selon un mode de réalisation de l'invention, la pièce 1 comprenant un substrat en ferrium C64. La dureté mesurée est la dureté Vickers (HV). La courbe (b) illustre le profil de dureté de la pièce 1 selon un mode de réalisation de l'invention, la pièce 1 comprenant un substrat en ferrium C61. La courbe (c) illustre le profil de dureté d'une pièce cémentée connue comprenant un substrat en ferrium C64. La courbe (d) illustre le profil de dureté d'une pièce cémentée connue comprenant un substrat en ferrium C61. En surface, la dureté d'une pièce selon un mode de réalisation de l'invention peut être supérieure à 200 HV de la dureté d'une pièce connue en ferrium C61 ou en ferrium C64 cémentée.

La couche nitrurée 3a comprend préférentiellement au moins un élément choisi parmi des précipités de nitrure et des précipités de carbonitrure. Ainsi, la dureté de la pièce 1 peut être augmentée.

### Procédé de fabrication de la pièce 1

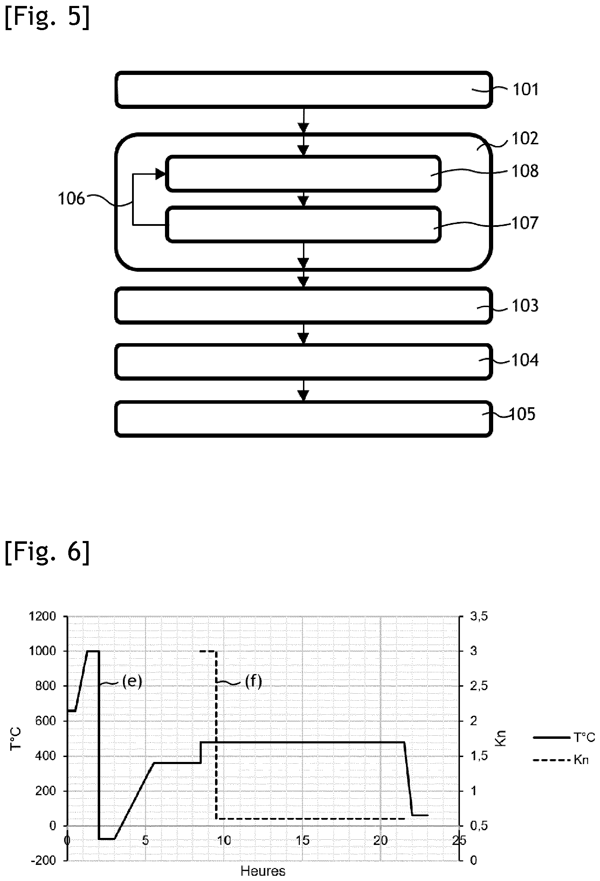

La figure 5 illustre schématiquement un procédé de fabrication de la pièce 1 selon un mode de réalisation de l'invention. Le procédé comprend une étape 101 de fourniture d'une pièce en ferrium C61, c'est-à-dire qu'elle présente une fraction massique moyenne en carbone comprise entre 0,13 % et 0,17 %, une fraction massique moyenne en cobalt comprise entre 17,5 % et 18,5 %, une somme de la fraction massique moyenne en molybdène et de la fraction massique moyenne en tungstène comprise entre 0,9 % et 1,3 %, une fraction massique moyenne en nickel comprise entre 7,2 % et 9,8 %, ou en ferrium C64, c'est-à-dire qu'elle présente une fraction massique moyenne en carbone comprise entre 0,09 % et 0,13 %, une fraction massique moyenne en cobalt comprise entre 15,5 % et 17 %, une fraction massique moyenne en aluminium inférieure à 0,1 %, une fraction massique moyenne en nickel comprise entre 7,2 % et 7,8 %.

Le procédé comprend une étape 102 de cémentation de la pièce dans une enceinte dont l'atmosphère est contrôlée à une température comprise entre 900°C et 1100° C. L'étape 102 de cémentation peut préférentiellement comprendre plusieurs cycles d'enrichissement 106 de la surface en carbone. Un cycle d'enrichissement 106 comprend une sous-étape d'injection d'un gaz cémentant 107 et une sous-étape d'injection d'un gaz neutre 108.

Lors de la sous-étape d'injection d'un gaz cémentant 107, un gaz cémentant est injecté dans l'enceinte de cémentation contenant la pièce, de manière à enrichir en carbone la surface de la pièce et à faire croître le taux surfacique en carbone de la pièce jusqu'à un taux surfacique en carbone maximum prédéterminé. La température dans l'enceinte est maintenue entre 900° C et 1100° C, pendant une durée t₁ par exemple comprise entre 60 s et 300 s. Le gaz cémentant peut être choisi au moins parmi du propane et de l'acétylène. Le taux de dilution du gaz cémentant injecté peut être compris entre 5 % et 75%, de préférence entre 10 % et 25 %, et le gaz cémentant peut être injecté à une pression comprise entre 0,1 bar et 3 bar, de préférence égale à 230 ± 50 mbar. Le terme « dilution » désigne la dilution du gaz cémentant dans un gaz neutre, par exemple de l'argon ou du diazote.

Lors de la sous-étape d'injection d'un gaz neutre 108, un gaz neutre est injecté dans l'enceinte de cémentation pendant une durée t₂ comprise entre 20 minutes à 3 heures, de manière à entraîner la diffusion du carbone de la surface vers l'intérieur de la pièce, et à faire décroître le taux surfacique en carbone jusqu'à un taux surfacique en carbone minimum prédéterminé. Le gaz neutre peut être choisi parmi de l'argon et du diazote. La succession des cycles d'enrichissements 106 permet d'enrichir la pièce en carbone en évitant que la fraction massique en carbone en surface de la pièce ne dépasse le taux surfacique supérieur prédéterminé.

La cémentation 102 est suivie d'une trempe 103. La trempe 103 comprend l'injection d'un gaz, par exemple neutre, à température ambiante, c'est-à-dire comprise entre 0° C et 50° C, dans l'enceinte de cémentation, de manière à arrêter la réaction de cémentation et à entraîner une transformation martensitique. L'étape de trempe 103 permet de transformer l'austénite majoritairement en phase martensitique.

La trempe 103 est suivie d'un traitement cryogénique 104. Le traitement cryogénique comprend le contrôle de la température dans l'enceinte contenant la pièce à une température comprise entre -100°C et -50°C. L'étape de traitement cryogénique 104 permet de transformer, en complément de la trempe 103, la part résiduelle de phase austénitique de la pièce en phase martensitique. La pièce présente, à l'issue du traitement cryogénique 104, au moins majoritairement une phase martensitique, notamment 90 % en volume de phase martensitique, et en encore plus préférentiellement seulement une phase martensitique.

Le traitement cryogénique 104 est suivi d'un vieillissement 105 de la pièce. Le vieillissement 105 de la pièce est mis en oeuvre en contrôlant la température dans l'enceinte de la pièce à une température comprise entre 450°C et 550°C, et préférentiellement à une température comprise entre 480°C et 500°C. Encore plus préférentiellement, lorsque le substrat 2 de la pièce présente la composition du ferrium C61, la température de vieillissement est comprise entre 480°C et 485°C. Ainsi, il est possible d'optimiser le vieillissement de la pièce sans entraîner de changement de phase de la phase martensitique. Encore plus préférentiellement, lorsque le substrat 2 de la pièce présente la composition du ferrium C64, la température de vieillissement est comprise entre 490° C et 500° C. Ainsi, il est possible d'optimiser le vieillissement de la pièce sans entraîner de changement de phase de la phase martensitique.

Les inventeurs ont découvert qu'il était possible de combiner le vieillissement de la pièce avec une nitruration de la pièce. En d'autres termes, la nitruration est réalisée dans le procédé selon le mode de réalisation de l'invention de manière simultanée au vieillissement de la pièce. La mise en oeuvre simultanée du vieillissement et de la nitruration est réalisée en injectant de l'ammoniac, préférentiellement de l'ammoniac dissocié, dans l'enceinte pendant le vieillissement de la pièce. La formation de la couche nitrurée 3a est contrôlée en imposant le potentiel d'azote (Kₙ) dans l'enceinte. Par exemple, l'imposition d'un Kₙ égal à 3 pendant une heure, suivi de l'imposition d'un Kₙ égal 0,6 pendant 11h permet de conférer une couche nitrurée 3a répondant aux attentes d'accroissement du niveau de dureté des couches superficielles tout en évitant la formation de phases métallurgiques indésirables (telle qu'un réseau intergranulaire de carbonitrures par exemple).

En effet, il est impossible de combiner le vieillissement et la nitruration pour la plupart des alliages d'acier. La nitruration doit être réalisée à une température inférieure à la température de revenu de l'alliage d'acier, de manière à éviter la transformation de la phase martensitique de la pièce via la formation de précipités de carbures responsables d'un adoucissement métallurgique. Or, sur la plupart des alliages d'acier utilisés à l'état cémentés pour des applications de pignonnerie, la température de revenu est bien inférieure à la température minimale nécessaire pour la nitruration. Par exemple, pour un alliage d'acier comprenant une fraction massique moyenne en carbone égale à 0,16 %, une fraction massique moyenne en nickel égale à 3,20 %, une fraction massique moyenne en chrome égale à 1,00 % une fraction massique moyenne en molybdène égale à 0,16 %, la température de revenu à l'état cémenté est inférieure ou égale à 190° C. Cette température est trop basse pour permettre la mise en oeuvre de la nitruration d'une pièce dans un tel alliage d'acier simultanément au traitement de revenu de la pièce. En effet, la nitruration requiert une température supérieure, préférentiellement supérieure à 450° C. Ainsi, dans le procédé selon un mode de réalisation de l'invention, la simultanéité du vieillissement et de la nitruration permet de simplifier le procédé de fabrication de la pièce 1.

En référence à la figure 6, la courbe (e) illustre la température contrôlée dans l'enceinte contenant la pièce par rapport au temps de traitement de la pièce, lors d'un procédé selon un mode de réalisation de l'invention. La courbe (f) illustre le potentiel d'azote Kₙ contrôlé dans l'enceinte par rapport au temps de traitement de la pièce, lors d'un procédé selon un mode de réalisation de l'invention. Les termes « potentiel d'azote » désignent le rapport p_{NH3}/p^{3/2}_{H2}, dans lequel p_{NH3} est la pression partielle d'ammoniac qui se dissocie à la surface 5 de la pièce pour donner de l'azote monoatomique qui diffusera dans la matrice ferritique, et p^{3/2}_{H2} est la pression partielle de dihydrogène à la surface 5 élevé à la puissance 3/2.

Lors du vieillissement 105, l'ammoniac dissocié peut être injecté, lors d'une première phase à un débit permettant d'entraîner un potentiel d'azote compris entre 1 et 5, préférentiellement compris entre 2,5 et 3,5. La durée de la première phase est comprise entre 20 min et 2h, préférentiellement entre 50 min et 70 min. L'ammoniac dissocié peut être injecté, lors d'une deuxième phase à un débit permettant d'entraîner un potentiel d'azote compris entre 0,1 et 1, préférentiellement compris entre 0,3 et 0,8. La durée de la deuxième phase est supérieure à 5 heures et préférentiellement comprise entre 10 et 12 heures.

## Revendications

1. Procédé de fabrication d'une pièce en acier (1) pour l'aéronautique comprenant les étapes consécutives de :
a) fourniture (101) d'une pièce (1) comprenant un substrat en acier (2), le substrat (2) étant réalisé soit en ferrium C61, soit en ferrium C64, et présentant, pour le ferrium C61 :
- une fraction massique moyenne en carbone comprise entre 0,13 % et 0,17 %,
- une fraction massique moyenne en cobalt comprise entre 17,5% et 18,5 %,
- une somme de la fraction massique moyenne en molybdène et de la fraction massique moyenne en tungstène comprise entre 0,9 % et 1,3 %, et
- une fraction massique moyenne en nickel comprise entre 9,2 % et 9,8 %,
ou présentant, pour le ferrium C64 :
- une fraction massique moyenne en carbone comprise entre 0,09 % et 0,13 %,
- une fraction massique moyenne en cobalt comprise entre 15,5 % et 17 %,
- une fraction massique moyenne en aluminium inférieure à 0,1 %, et
- une fraction massique moyenne en nickel comprise entre 7,2 % et 7,8 %,
b) cémentation (102) de la pièce dans une atmosphère contrôlée à une température comprise entre 900° C et 1100° C, de manière à ce qu'au moins une partie de la pièce présente une fraction massique moyenne en carbone comprise entre 0,4 % et 0,6 %,
c) trempe (103) de la pièce et traitement cryogénique (104) de la pièce dans une atmosphère contrôlée à une température comprise entre -50° C et -100° C, et
d) vieillissement (105) de la pièce dans une atmosphère contrôlée à une température comprise entre 450° C et 550° C,
**caractérisé en ce que** le vieillissement (105) comprend une nitruration de la pièce dans une atmosphère comprenant de l'ammoniac de sorte à ce que la pièce comprenne une surface nitrurée,
la nitruration étant simultanée au vieillissement de la pièce et la couche nitrurée (3) ainsi obtenue présentant une épaisseur comprise entre 5 µm à 180 µm, préférentiellement comprise entre 50 µm et 150 µm, une fraction massique moyenne en carbone comprise entre 0,4 % et 0,6 % et une fraction massique moyenne en azote comprise entre 0,6 % et 3 %.

2. Procédé de fabrication d'une pièce (1) selon la revendication 1, dans lequel l'étape b) de cémentation comprend une injection d'un gaz cémentant dans une enceinte de cémentation contenant la pièce, le gaz cémentant étant au moins choisi parmi le propane et l'acétylène.

3. Pièce (1) en acier pour l'aéronautique susceptible d'être obtenue par un procédé selon la revendication 1 ou la revendication 2, comprenant un substrat en acier (2), le substrat (2) étant réalisé soit en ferrium C61, soit en ferrium C64, et présentant pour le ferrium C61 :
- une fraction massique moyenne en carbone comprise entre 0,13% et 0,17 %,
- une fraction massique moyenne en cobalt comprise entre 17,5% et 18,5 %,
- une somme de la fraction massique moyenne en molybdène et de la fraction massique moyenne en tungstène comprise entre 0,9 % et 1,3 %, et
- une fraction massique moyenne en nickel comprise entre 9,2% et 9,8 %,
ou présentant, pour le ferrium C64 :
- une fraction massique moyenne en carbone comprise entre 0,09 % et 0,13 %,
- une fraction massique moyenne en cobalt comprise entre 15,5 % et 17 %,
- une fraction massique moyenne en aluminium inférieure à 0,1 %, et
- une fraction massique moyenne en nickel comprise entre 7,2 % et 7,8 %,
**caractérisée en ce que** la pièce (1) est cémentée et nitrurée, de sorte qu'elle comprend une couche nitrurée (3), la couche nitrurée (3) recouvrant au moins en partie le substrat (2) et la couche nitrurée (3) présentant une épaisseur comprise entre 5 µm à 180 µm, préférentiellement comprise entre 50 µm et 150 µm, une fraction massique moyenne en carbone comprise entre 0,4 % et 0,6 % et une fraction massique moyenne en azote comprise entre 0,6 % et 3 %.

4. Pièce selon la revendication 3, dans laquelle la couche nitrurée (3) comprend au moins un élément choisi parmi des précipités de nitrure et des précipités de carbonitrure.

5. Pièce selon la revendication 4, dans laquelle la couche nitrurée (3) présente majoritairement une phase martensitique.

6. Pignon de transmission de puissance (4), comprenant une pièce (1) selon l'une des revendications 3 à 5.

## Patentansprüche

1. Verfahren zur Herstellung eines Stahlteils (1) zur Verwendung in der Luftfahrt, das die folgenden aufeinanderfolgenden Schritte umfasst:
a) Bereitstellen (101) eines Teils (1), das ein Stahlsubstrat (2) umfasst, wobei das Substrat (2) entweder aus Ferrium C61 oder aus Ferrium C64 hergestellt ist, und für das Ferrium C61 Folgendes aufweist:
- einen mittleren Massenanteil an Kohlenstoff von zwischen 0,13 % und 0,17 %,
- einen mittleren Massenanteil an Kobalt von zwischen 17,5 % und 18,5 %,
- eine Summe des mittleren Massenanteils an Molybdän und des mittleren Massenanteils an Wolfram von zwischen 0,9 % und 1,3 %, und
- einen mittleren Massenanteil an Nickel von zwischen 9,2 % und 9,8 %,
oder für das Ferrium C64 Folgendes aufweist:
- einen mittleren Massenanteil an Kohlenstoff von zwischen 0,09 % und 0,13 %,
- einen mittleren Massenanteil an Kobalt von zwischen 15,5 % und 17 %,
- einen mittleren Massenanteil an Aluminium von unter 0,1 %, und
- einen mittleren Massenanteil an Nickel von zwischen 7,2 % und 7,8 %,
b) Einsatzhärten (102) des Teils in einer kontrollierten Atmosphäre bei einer Temperatur von zwischen 900°C und 1100° C, derart dass zumindest ein Teil des Teils einen mittleren Massenanteil an Kohlenstoff von zwischen 0,4 % und 0,6 % aufweist,
c) Abschreckhärten (103) des Teils und kryogenes Behandeln (104) des Teils in einer kontrollierten Atmosphäre bei einer Temperatur von zwischen -50°C und -100°C, und
d) Aushärten (105) des Teils in einer kontrollierten Atmosphäre bei einer Temperatur von zwischen 450°C und 550°C,
**dadurch gekennzeichnet, dass** das Aushärten (105) ein Nitrieren des Teils in einer Atmosphäre umfasst, die Ammoniak umfasst, derart dass das Teil eine nitrierte Oberfläche umfasst,
wobei das Nitrieren gleichzeitig mit dem Aushärten des Teils erfolgt und die so erhaltene nitrierte Schicht (3) eine Dicke von zwischen 5 µm bis 180 µm, vorzugsweise zwischen 50 µm und 150 µm, einen mittleren Massenanteil an Kohlenstoff von zwischen 0,4 % und 0,6 % und einen mittleren Massenanteil an Stickstoff von zwischen 0,6 % und 3 % aufweist.

2. Verfahren zur Herstellung eines Teils (1) nach Anspruch 1, wobei der Schritt b) des Einsatzhärtens ein Einpressen eines Einsatzhärtungsgases in eine Einsatzhärtungsumfassung umfasst, die das Teil enthält, wobei das Einsatzhärtungsgas mindestens aus Propan und Acetylen ausgewählt wird.

3. Stahlteil (1) zur Verwendung in der Luftfahrt, das durch ein Verfahren nach Anspruch 1 oder Anspruch 2 erhalten werden kann und das ein Stahlsubstrat (2) umfasst, wobei das Substrat (2) entweder aus Ferrium C61 oder aus Ferrium C64 hergestellt ist, und für das Ferrium C61 Folgendes aufweist:
- einen mittleren Massenanteil an Kohlenstoff von zwischen 0,13 % und 0,17 %,
- einen mittleren Massenanteil an Kobalt von zwischen 17,5 % und 18,5 %,
- eine Summe des mittleren Massenanteils an Molybdän und des mittleren Massenanteils an Wolfram von zwischen 0,9 % und 1,3 %, und
- einen mittleren Massenanteil an Nickel von zwischen 9,2 % und 9,8 %,
oder für das Ferrium C64 Folgendes aufweist:
- einen mittleren Massenanteil an Kohlenstoff von zwischen 0,09 % und 0,13 %,
- einen mittleren Massenanteil an Kobalt von zwischen 15,5 % und 17 %,
- einen mittleren Massenanteil an Aluminium von unter 0,1 %, und
- einen mittleren Massenanteil an Nickel von zwischen 7,2 % und 7,8 %,
**dadurch gekennzeichnet, dass** das Teil (1) einsatzgehärtet und nitriert ist, derart dass es eine nitrierte Schicht (3) umfasst, wobei die nitrierte Schicht (3) das Substrat (2) zumindest teilweise bedeckt und die nitrierte Schicht (3) eine Dicke von zwischen 5 µm bis 180 µm, vorzugsweise zwischen 50 µm und 150 µm, einen mittleren Massenanteil an Kohlenstoff von zwischen 0,4 % und 0,6 % und einen mittleren Massenanteil an Stickstoff von zwischen 0,6 % und 3 % aufweist.

4. Teil nach Anspruch 3, wobei die nitrierte Schicht (3) mindestens ein Element umfasst, das aus Nitridniederschlägen und Carbonitridniederschlägen ausgewählt ist.

5. Teil nach Anspruch 4, wobei die nitrierte Schicht (3) mehrheitlich eine martensitische Phase aufweist.

6. Leistungsübertragungsritzel (4), das ein Teil (1) nach einem der Ansprüche 3 bis 5 umfasst.

## Claims

1. A process for manufacturing a steel part for use in aeronautics (1) comprising the consecutive steps of:
a) providing (101) a part (1) comprising a steel substrate (2), the substrate (2) being made either in ferrium C61 or in ferrium C64, and comprising for the ferrium C61 :
- an average mass fraction of carbon comprised between 0.13% and 0.17%,
- an average mass fraction of cobalt comprised between 17.5% and 18.5%,
- a sum of the average mass fraction of molybdenum and the average mass fraction of tungsten comprised between 0.9% and 1.3% and
- an average mass fraction of nickel comprised between 9.2% and 9.8,
or comprising for the ferrium C64 :
- an average mass fraction of carbon comprised between 0.09% and 0.13%,
- an average mass fraction of cobalt comprised between 15.5% and 17%,
- an average mass fraction of aluminum less than 0.1%, and
- an average mass fraction of nickel comprised between 7.2% and 7.8,
b) case-hardening (102) the part in a controlled atmosphere at a temperature comprised between 900°C and 1100°C, so that at least a portion of the part (1) has an average mass fraction of carbon comprised between 0.4% and 0.6%,
c) quenching (103) the part and cryogenically treating (104) the part in a controlled atmosphere at a temperature comprised between -50°C and -100°C, and
d) aging (105) the part in a controlled atmosphere at a temperature comprised between 450°C and 550°C,
**characterized in that** the aging (105) comprises nitriding the part in an atmosphere comprising ammonia so that the part comprises a nitrided surface,
nitriding being simultaneous with aging of the part and the nitrided layer (3) thus obtained having a thickness comprised between 5 µm and 180 µm, preferably comprised between 50 µm and 150 µm, an average mass fraction of carbon comprised between 0.4% and 0.6% and an average mass fraction of nitrogen comprised between 0.6% and 3%.

2. The process as claimed in claim 1, wherein step b) of case-hardening comprises an injection of a carburizing gas into a carburizing chamber containing the part, the carburizing gas being at least selected from propane and acetylene.

3. A steel part for use in aeronautics (1) obtainable by a process as claimed in claim 1 or 2, comprising a steel substrate (2), the substrate (2) being made either in ferrium C61 or in ferrium C64, and comprising for the ferrium C61 :
- an average mass fraction of carbon comprised between 0.13% and 0.17%,
- an average mass fraction of cobalt comprised between 17.5% and 18.5%,
- a sum of the average mass fraction of molybdenum and the average mass fraction of tungsten comprised between 0.9% and 1.3% and
- an average mass fraction of nickel comprised between 9.2% and 9.8,
or comprising for the ferrium C64 :
- an average mass fraction of carbon comprised between 0.09% and 0.13%,
- an average mass fraction of cobalt comprised between 15.5% and 17%,
- an average mass fraction of aluminum less than 0.1%, and
- an average mass fraction of nickel comprised between 7.2% and 7.8,
**characterized in that** the part (1) is case-hardened and nitrided, so that it comprises a nitrided layer (3), the nitrided layer (3) at least partially covering the substrate (2) and the nitrided layer (3) having a thickness comprised between 5 µm and 180 µm, preferentially comprised between 50 µm and 150 µm, an average mass fraction of carbon comprised between 0.4% and 0.6% and an average mass fraction of nitrogen comprised between 0.6% and 3%.

4. The part as claimed in claim 3, wherein the nitrided layer (3) comprises at least one element selected from nitride precipitates and carbonitride precipitates.

5. The part as claimed in claim 4, wherein the nitrided layer (3) has a predominantly martensitic phase.

6. A power transmission gear (4), comprising a part (1) as claimed in one of claims 3 to 5.
